# EUROPÄISCHE PATENTANMELDUNG

(11) **EP 2 361 540 A1**
(43) Veröffentlichungstag der Anmeldung: **31.08.2011**
(21) Anmeldenummer: 11153049.9
(22) Anmeldetag: 02.02.2011
(51) Int. Cl.: A47J 31/42, A47J 42/50

(54) **Kaffeevollautomat mit einer Transportvorrichtung für Bohnen**

(30) Priorität: 26.02.2010 DE 102010002441
(71) Anmelder: BSH Bosch und Siemens Hausgeräte GmbH, 81739 München (DE)
(72) Erfinder: Eder, Florian, 83132, Pittenhart (DE); Mathes, Anton, 83364, Neukirchen am Teisenberg (DE); Schneiderbauer, Gottfried, 84553, Halsbach (DE)

(57) **Zusammenfassung**

Ein Kaffeevollautomat für Haushaltszwecke, mit einem Bohnenbehälter (10) zur Bevorratung von Kaffeebohnen zur Zubereitung von Kaffeegetränken und mit einem Mahlwerk zum Vermahlen der Bohnen wird weitergebildet durch eine mechanische und/oder pneumatische Transportvorrichtung (16) für Kaffeebohnen (12) zwischen dem Bohnenbehälter (10) und dem Mahlwerk (14).

## Beschreibung

Die Erfindung betrifft einen Kaffeevollautomaten für Haushaltszwecke zur Zubereitung kaffeebasierter Heißgetränke. Ein Kaffeevollautomat umfasst im Allgemeinen einen Bohnenbehälter zur Bevorratung von Kaffeebohnen für die Zubereitung von Kaffeegetränken, ein Mahlwerk zum Vermahlen der Bohnen und eine Brühkammer zur Zubereitung eines Kaffeegetränks unter Einsatz von Heißwasser.

Die DE 603 15 134 T2 offenbart eine Kaffeeabgabevorrichtung mit einem Röster, mit einer Mühle, die mit dem Röster verbunden ist und zum Mahlen von Kaffeebohnen nach dem Rösten dient, mit einer Braumaschine, die mit der Mühle verbunden ist und zum Brauen von Kaffee aus den gemahlenen Kaffeebohnen vorgesehen ist und mit einer Transportvorrichtung, die den Röster und die Mühle verbindet, um ungemahlenen und gemahlenen Kaffee mit Hilfe eines Antriebsmechanismus zu transportieren. Mühle und Braumaschine sind mit mehreren Verbindungen zur Transportvorrichtung versehen. Diese Kaffeeabgabevorrichtung stellt ein stationäres System dar, das einen erheblichen Platzbedarf hat.

Aufgabe der Erfindung ist es, einen Vollautomaten anzugeben, dessen Platzbedarf reduziert ist.

Diese Aufgabe wird bei dem eingangs genannten Kaffeevollautomaten durch eine pneumatische und/oder mechanische Transportvorrichtung für die Kaffeebohnen zwischen Bohnenbehälter und Mahlwerk gelöst. Da herkömmliche Kaffeevollautomaten für den Transport der Kaffeebohnen stromab des Bohnenbehälters regelmäßig das Schwerkraftprinzip nutzen, sind sie auf eine Anordnung des Bohnenbehälters im Wesentlichen oberhalb des Mahlwerks festgelegt. Dadurch erhält der Kaffeevollautomat eine gewisse Mindesthöhe, die Konstruktion ist so weit beschränkt. Die Erfindung dagegen wendet sich davon ab, zum Transport der Kaffeebohnen die Schwerkraftwirkung zu nutzen, weil sie die Konstruktion der Transportwege zwischen Bohnenbehälter und Mahlwerk erheblich einschränkt. Sie verfolgt vielmehr das Prinzip eines aktiven, motorisch angetriebenen Transports der Kaffeebohnen vorzugsweise mit mechanischen oder pneumatischen Mitteln oder einer Kombination daraus. Sie verfügt dazu über eine Antriebseinrichtung für die Transportvorrichtung, die sich regelmäßig aus elektrischer Energie speist. Die Transportvorrichtung ermöglicht es, die zwingende Anordnung von Bohnenbehälter und Mahlwerk aufzulösen, die bislang übereinander war. Damit gewinnt der Kaffeevollautomat nicht nur an konstruktiver Freiheit, weil der Bohnenbehälter und das Mahlwerk jetzt an nahezu jeder beliebigen Stelle angeordnet werden können und damit der zur Verfügung stehende Raum innerhalb des Kaffeevollautomaten optimal ausgenutzt werden kann. Die Transportvorrichtung ermöglicht es vor allem auch, mehrere Bohnenbehälter für unterschiedliche Kaffeesorten zur Verfügung zu stellen, ohne das sie gegenüber dem Mahlwerk gleich günstig positioniert werden müssten. Damit ist die Anzahl an Bohnenbehältern nicht mehr auf den zur Verfügung stehenden Platz eingangs des Mahlwerks beschränkt.

Die nahe liegende Aufgabe einer Transportvorrichtung zwischen Bohnenbehälter und Mahlwerk besteht im Transport der Bohnen aus dem Behälter in das Mahlwerk. Nach einer vorteilhaften Ausgestaltung der Erfindung ermöglicht die Transporteinrichtung jedoch auch eine Transport- bzw. Förderrichtung vom Mahlwerk zum Bohnenbehälter, kehrt also die gewöhnliche Transportrichtung um. Durch die Umkehrung der Transportrichtung lässt sich ein Leitungsweg zwischen dem Bohnenbehälter und dem Mahlwerk entleeren. Dadurch wird eine gewählte Dosierung einer Kaffeebohnenmenge für eine Zubereitungsportion nicht durch Restmengen an Bohnen in der Leitung verfälscht. Bei Kaffeevollautomaten mit mehreren Bohnenbehältern stellt sie außerdem sicher, dass tatsächlich nur Bohnen der gewählten Sorte für ein Kaffeegetränk verwendet werden, und der Geschmack des Getränks nicht durch Restmengen einer anderen Bohnensorte beeinträchtigt wird. Sie vermeidet also eine Vermischung verschiedener Bohnensorten bei Kaffeevollautomaten mit mehreren Vorratsbehältern für unterschiedliche Bohnensorten.

Als mechanische Transporteinrichtung können beispielsweise Förderschnecken nach dem Prinzip der archimedischen Schraube, aber auch Rollenantriebe wie beispielsweise gegebenenfalls hintereinander angeordnete Bürstenräder, Kolbenpumpen, Transportbänder oder sonstige Fördermittel für grobkörniges Schüttgut verwendet werden. Schneckentriebe eignen sich vor allem auch dazu, die Kaffeebohnen senkrecht aufwärts zu fördern. Eine Umlenkung der Transportrichtung lässt sich beispielsweise mit Bürstenrädern oder Förderbändern einfach bewerkstelligen. Je nach konstruktiver Anforderung können auch mehrere der genannten Prinzipien miteinander kombiniert werden.

Die Einrichtungen einer mechanischen Transporteinrichtung sind regelmäßig entlang der gesamten Transport- bzw. Förderstrecke angeordnet. Daher ist es so gut wie ausgeschlossen, dass Kaffeebohnen auf der Förderstrecke versehentlich liegen bleiben. Besonders einfach lässt sich bei mechanischen Transportvorrichtungen die Förderrichtung umkehren, weil lediglich die Antriebsrichtung der Transportvorrichtung umgekehrt werden muss. Dies lässt sich insbesondere bei einem elektrischen Antrieb besonders einfach durch Umpolen der Stromzufuhr umsetzen.

Nach einer alternativen Ausgestaltungsform der Erfindung kann eine pneumatische Transportvorrichtung Überdruck oder Unterdruck auf dem Leitungsweg zwischen Bohnenbehälter und Mahlwerk erzeugen, der die Kaffeebohnen mit sich nimmt. Im Gegensatz zur mechanischen Transportvorrichtung bietet die pneumatische Transportvorrichtung den Vorteil, dass ihre Einrichtungen nicht entlang des Transportwegs angeordnet werden müssen. Sie können daher flexibler innerhalb des Gehäuses des Kaffeevollautomaten platziert werden. Sie schaffen also eine größere Konstruktionsfreiheit und erfordern weniger Konstruktionsraum längs des Transportwegs.

Dafür erfordern sie eine besondere Schnittstelle am Transportweg, der ein Eindringen der Kaffeebohnen in eine Antriebseinheit der pneumatischen Transportvorrichtung verhindert. Im Falle eines Transports mittels Überdrucks betrifft dies den abgeschalteten Zustand der Transportvorrichtung, bei Unterdruck den Betriebszustand. Dafür eignen sich Einrichtungen, die zwar luftdurchlässig, aber nicht durchlässig für Kaffeebohnen sind. Dafür werden regelmäßig Siebe oder Gitter eingesetzt. Alternativ dazu können auch als Abscheidevorrichtung bzw. Abscheider Bereiche des Transportwegs mit geringerer Strömung ausgestaltet werden, in denen sich beispielsweise der Leitungsquerschnitt aufweitet. Prinzipiell kann die Schwerkraftwirkung auf die Kaffeebohnen ausgenutzt werden, indem Überdruck oder Unterdruck entgegen der Schwerkraft wirkt, um die Bohnen von der Schnittstelle fernzuhalten. Nach einer vorteilhaften Ausgestaltung der Erfindung dient ein Zyklon als Schnittstelle bzw. Abscheider zwischen der pneumatischen Transportvorrichtung und dem Leitungsweg. Er stellt eine zuverlässige Trennung zwischen den Kaffeebohnen als Transportgut und der Luft als fluidem Transportmedium sicher.

Nach einer weiteren vorteilhaften Ausgestaltung der Erfindung verfügt der Kaffeevollautomat über ein Schauglas stromauf des Mahlwerks, durch das die transportierten Bohnen kurz vor dem Mahlen für den Bediener sichtbar werden. Unter einem Schauglas ist eine Einrichtung zu verstehen, die einen Blick des Bedieners während des Betriebs auf die zu verarbeitenden Bohnen ermöglicht. Dazu kann eine Transportleitung für die Kaffeebohnen mit einem separaten Fenster ausgestattet sein. Alternativ kann die Leitung selbst ganz oder teilweise transparent ausgebildet sein. Dadurch kann er nicht nur die Menge, sondern auch die Art bzw. Sorte der Bohnen überprüfen, die ins Mahlwerk gelangen. Dies hat insbesondere dann Bedeutung, wenn der Kaffeevollautomat über mehrere Bohnenbehälter verfügt, die mit unterschiedlichen Sorten an Kaffeebohnen befüllt sind. Das Schauglas ermöglicht es dem Bediener zu überprüfen, ob die von ihm gewählte Bohnensorte tatsächlich auch vermahlen wird. Außerdem kann er anhand des Durchflusses der Bohnen in etwa auch die Bohnenmenge abschätzen, die für sein gewähltes Getränk verarbeitet werden, und damit eine stärkere oder schwächere Brühung vorsehen. Das Schauglas führt dem Benutzer das Naturprodukt Kaffee vor der Brühung buchstäblich vor Augen. Das dürfte zu einer Emotionalisierung des Zubereitungsvorgangs führen und ein besonderes Alleinstellungsmerkmal des Kaffeevollautomaten darstellen.

Durch Ein- und Ausschalten der Transportvorrichtung bietet der erfindungsgemäße Kaffeevollautomat gegenüber demjenigen mit herkömmlichem Schwerkrafttransport die Möglichkeit eines relativ genau steuerbaren Kaffeebohnenstroms. Nach einer weiteren vorteilhaften Ausgestaltung der Erfindung verfügt der Kaffeevollautomat über eine Vereinzelungsvorrichtung für die Bohnen. Sie macht jede Bohne in einem Raum-und/oder Zeitabschnitt separat erfassbar. Dazu können die Bohnen einzeln hintereinander angeordnet werden, beispielsweise, indem sie durch einen Trichterabschnitt geleitet werden, dessen engste Stelle eine lichte Weite einer Kaffeebohne aufweist. In einer daran anschließenden Leitung oder auf einem Transportband können die Bohnen dann mittels einer Lichtschranke nach Anzahl und ggf. nach Größe oder in Abhängigkeit von der Transportgeschwindigkeit nach Zeiteinheit einzeln erfasst werden. Damit lässt sich die Kaffeebohnenmenge, die für eine gewünschte Getränkemenge vermahlen werden soll, hochgenau dosieren und so die Stärke der Brühung für jede Zubereitungsportion beeinflussen bzw. bestimmen.

Nach einer weiteren vorteilhaften Ausgestaltung der Erfindung dient die Transporteinrichtung nicht bzw. nicht nur dem Transport der Kaffeebohnen zwischen Bohnenbehälter und Mahlwerk, sondern gegebenenfalls auch dem Transport der Kaffeebohnen von einer Außenseite des Kaffeevollautomaten aus in den Bohnenbehälter hinein. Die Erfindung verlässt also herkömmliche Konstruktionen, bei denen die Kaffeebohnen von Hand und regelmäßig von einer Oberseite aus in den Kaffeevollautomaten gefüllt werden. Sie verfolgt vielmehr das Prinzip, den Vollautomaten selbsttätig mit Kaffeebohnen zu beladen. Der Bohnenbehälter selbst muss folglich nicht mehr frei und großflächig zugänglich sein, um die Bohnen bequem einfüllen zu können. Ein Öffnen von Türen, von Schüben oder gegebenenfalls ein Ausfahren eines vollständigen Einbauvollautomaten kann damit entfallen. Insbesondere bei Vollautomaten, zum Beispiel Einbaugeräten, die über eine Frischwasserzufuhr und einen Abwasseranschluss verfügen, lässt sich dadurch eine Bedienung des Einbauvollautomaten allein über die Frontseite des Gerätes bewerkstelligen. Ein Ausfahren des Gerätes ist dann bestenfalls für wesentlich seltenere Service- und Reparaturtätigkeiten erforderlich. Dadurch lässt sich der erfindungsgemäße Vollautomat erheblich einfacher und komfortabler bedienen als herkömmliche Geräte.

Nach einer weiteren vorteilhaften Ausgestaltung des erfindungsgemäßen Kaffeevollautomaten verfügt er über eine pneumatische Transportvorrichtung für Kaffeemehl zwischen dem Ausgang des Mahlwerks und dem Eingang einer Brühkammer. Sie kann grundsätzlich eines der oben genannten Förderprinzipien und Abscheidevorrichtungen nutzen, die sich auch oder ggf. ausschließlich für pulverförmige Transportgüter eignen. Als Abscheidevorrichtung einer unterdruckbasierten Transporteinrichtung beispielsweise eignet sich insbesondere ein Zyklon. Vor allem, da Kaffeemehl gegenüber Kaffeebohnen schwerer zu transportieren ist, wurde das Kaffeemehl zwischen Mahlwerk und Brühkammer bisher regelmäßig per Schwerkraft transportiert. Allerdings ist bei vielen herkömmlichen Kaffeevollautomaten eine nachteilig lange Entfernung zwischen Mahlwerk und Brühkammer kaum zu vermeiden. Die erfinderische Transportvorrichtung gewährleistet dagegen, dass jede Portion frisch gemahlenen Kaffeemehls auch vollständig in die Brühkammer gelangt. Sie vermeidet also, dass ein Anteil an frisch gemahlenem Kaffeemehl zwischen Mahlwerk und Brühkammer liegen bleibt, bis zum nächsten Brühvorgang Aroma verliert und erst im nächsten Brühvorgang in die Brühkammer gelangt. Denn dadurch verliert die folgende Getränkeportion zumindest an Aroma, und zwar umso mehr, je größer der zeitliche Abstand zwischen zwei Brühungen ausfällt. Die erfinderische Transportvorrichtung dagegen sorgt für ein zuverlässiges Beschicken der Brühkammer mit ausschließlich frisch gemahlenem Kaffeemehl und damit für gleichmäßig gutes Aroma.

Die Erfindung ermöglicht, dasselbe Transportprinzip für mehrere Transportaufgaben des Kaffeevollautomaten zu nutzen, beispielsweise für die Transportstrecken des Kaffees sowohl zwischen dem Bohnenbehälter und dem Mahlwerk als auch zwischen dem Mahlwerk und der Brühkammer. Durch die Verwendung desselben Transportprinzips für mehrere Transportstrecken kann beispielsweise eine Antriebseinrichtung für mehrere Transportstrecken eingesetzt und so eine zusätzliche eingespart werden. Mit Unterdruck als Transportprinzip können Kaffeebohnen sowohl von einer Außenseite des Kaffeevollautomaten, zum Beispiel aus einer Verkaufsverpackung heraus, in den Bohnenbehälter hinein als auch zwischen dem Bohnenbehälter und dem Mahlwerk transportiert werden. Der Unterdruck kann schließlich auch noch für den Transport des Kaffeemehls vom Mahlwerk in die Brühkammer dienen. Für alle drei oben genannten Transportabschnitte kann dieselbe Unterdruckvorrichtung verwendet werden, deren Unterdruck über Anschlüsse an den drei Transportabschnitten durch geeignete Klappen oder Ventile gesteuert werden kann. Mit Überdruck als Transportprinzip lassen sich nach diesem Vorbild die Transportabschnitte zwischen dem Bohnenbehälter und dem Mahlwerk und vom Mahlwerk in die Brühkammer bedienen

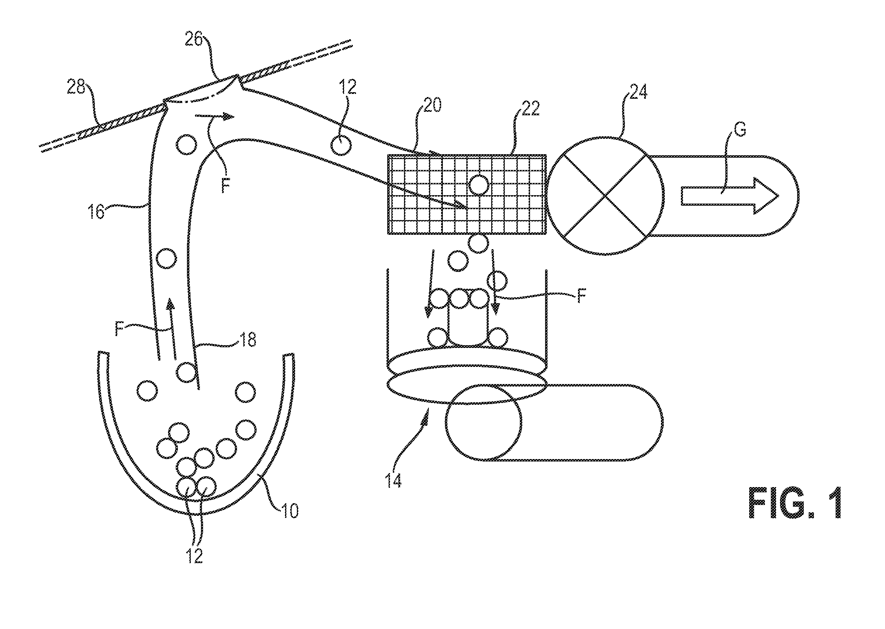

Das Prinzip der Erfindung wird im Folgenden anhand einer Zeichnung beispielshalber noch näher erläutert. In der Zeichnung zeigt die einzige Figur 1 eine Prinzipdarstellung einer erfindungsgemäßen Transportvorrichtung.

Zwischen einem Bohnenbehälter 10, der stilisierte Kaffeebohnen 12 enthält, und einem Mahlwerk 14 verläuft eine Leitung 16 für Kaffeebohnen 12. Sie erstreckt sich damit über die Transport- bzw. Förderstrecke der Kaffeebohnen 12. Sie ragt mit ihrem ersten Ende 18 in den Bohnenbehälter 10 hinein und endet mit ihrem zweiten Ende 20 an einem Rückhaltegitter 22. Das Rückhaltegitter 22 befindet sich oberhalb des Mahlwerks 14.

Hinter dem Rückhaltegitter 22 ist ein Gebläse 24 angeordnet, das auf der Rückseite des Gebläses 24 für einen Luftstrom in Richtung des Pfeils G sorgt. Da das Gebläse 24 an seiner Vorderseite an der Leitung 16 angeschlossen ist, erzeugt es in der Leitung 16 einen Luftstrom in einer Förderrichtung F. Das Gebläse 24 bildet zusammen mit der Leitung 16 eine pneumatische Transportvorrichtung, indem es einen Unterdruck in der Leitung 16 hervorruft, der die Kaffeebohnen 12 mit sich reißt. Im Verlauf der Leitung 16 ist darüber hinaus ein Schauglas 26 angeordnet, das einen Blick durch ein Gerätegehäuse 28 hindurch in die Leitung 16 erlaubt.

Der Bohnenbehälter 10 ist nicht, wie sonst üblich, oberhalb des zugehörigen Mahlwerks angeordnet. In der Figur 1 befindet er sich in etwa auf gleicher Höhe wie das Mahlwerk 10. Die Bohnen 12 können also nicht allein durch Schwerkraftwirkung in das Mahlwerk 14 gelangen, beispielsweise durch Öffnen einer Klappe oder eines Schotts, so dass sie in das Mahlwerk 14 rutschen. Um dorthin zu gelangen, wird das Gebläse 24 eingeschaltet, das einen Unterdruck in der Leitung 16 erzeugt. Der Unterdruck saugt Luft durch das erste Ende 18 der Leitung 16 an, das im Bohnenbehälter 10 mündet. Dabei reißt er Bohnen 12 aus dem Bohnenbehälter 10 durch die Leitung 16 hindurch bis an deren zweites Ende 20. Hier trennt ein Rückhaltegitter 22 die Bohnen 12 von dem Luftstrom. Sie stauen sich am Rückhaltegitter 22 und fallen der Schwerkraftwirkung folgend in das Mahlwerk 14 hinein.

Diesen ungewöhnlichen Vorgang kann der Bediener des Kaffeevollautomaten von einer Außenseite aus beobachten: Das Schauglas 26 bietet dem Bediener durch die Gehäusewand 28 hindurch einen Blick in die Leitung 16. So kann er verfolgen, wie viele Bohnen 12 für eine angeforderte Getränkeportion vom Bohnenbehälter 10 in das Mahlwerk 14 transportiert werden. Das Schauglas 26 gibt ihm das Gefühl einer gewissen Kontrolle über die im Übrigen nicht sichtbaren Vorgänge innerhalb des Kaffeevollautomaten. Sie führt zu einer gewissen Emotionalisierung und kann besondere Bedeutung gewinnen, wenn der Kaffeevollautomat über mehrere Bohnenbehälter 10 verfügt, die mit unterschiedlichen Arten von Kaffeebohnen 12 beschickt sind. Der Bediener kann dann ggf. kontrollieren, ob die gewählte Bohnensorte seiner Bedienereingabe am Vollautomaten entsprechend verarbeitet wird und die verarbeitete Menge an Kaffeebohnen 12 überprüfen.

Da es sich bei den vorhergehenden, detailliert beschriebenen Kaffeevollautomaten um ein Ausführungsbeispiel handelt, kann er in üblicher Weise vom Fachmann in einem weiten Umfang modifiziert werden, ohne den Bereich der Erfindung zu verlassen. Insbesondere kann auch die konkrete Anordnung des Bohnenbehälters gegenüber dem Mahlwerk und innerhalb des Gehäuses in anderer Form als in der hier beschriebenen folgen. Ebenso kann das Gebläse in einer anderen Form ausgestaltet und an anderer Stelle positioniert werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrmals vorhanden sein können.

### Bezugszeichenliste

- 10: Bohnenbehälter
- 12: Kaffeebohne
- 14: Mahlwerk
- 16: Leitung
- 18: erstes Ende der Leitung 16
- 20: zweites Ende der Leitung 16
- 22: Rückhaltegitter
- 24: Gebläse
- 26: Schauglas
- 28: Gehäusewandung

- F: Förderrichtung
- G: Luftstromrichtung

## Patentansprüche

1. Kaffeevollautomat für Haushaltszwecke, insbesondere Einbaukaffeevollautomat, mit einem Bohnenbehälter (11) zur Bevorratung von Kaffeebohnen (12), mit einem Mahlwerk (14), **gekennzeichnet durch** eine pneumatische und/oder mechanische Transportvorrichtung (16, 24) für Kaffeebohnen (12) zwischen dem Bohnenbehälter (10) und dem Mahlwerk (14).

2. Kaffeevollautomat nach Anspruch 1, **gekennzeichnet durch** eine Förderrichtung der Transporteinrichtung (16, 24) vom Mahlwerk (14) zum Bohnenbehälter (10).

3. Kaffeevollautomat nach Anspruch 1 oder 2, **gekennzeichnet durch** eine Förderschnecke, Bürstenräder, Kolbenpumpe oder einen federbelasteten Kolben als mechanische Transportvorrichtung.

4. Kaffeevollautomat nach Anspruch 1 oder 2, **gekennzeichnet durch** eine Unterdruckeinrichtung (24) als Bestandteil einer pneumatische Transportvorrichtung (16, 24).

5. Kaffeevollautomat nach Anspruch 4, **gekennzeichnet durch** einen Abscheider (22) für Bohnen (12) aus einem Luftstrom.

6. Kaffeevollautomat nach einem der obigen Ansprüche, **gekennzeichnet durch** ein Schauglas (26) stromauf des Mahlwerks (14).

7. Kaffeevollautomat nach einem der obigen Ansprüche, **gekennzeichnet durch** eine Vereinzelungsvorrichtung für die Bohnen (12).

8. Kaffeevollautomat insbesondere nach einem der obigen Ansprüche, **gekennzeichnet durch** eine luftstrombasierte Transportvorrichtung für Kaffeebohnen (12), die dafür ausgebildet ist, den Bohnenbehälter (10) zu beladen.

9. Kaffeevollautomat nach einem der obigen Ansprüche, **gekennzeichnet durch** eine pneumatische Transportvorrichtung für Kaffeemehl zwischen dem Mahlwerk (14) und einer Brühkammer.

10. Kaffeevollautomat mit einer pneumatischen Transportvorrichtung nach einem der obigen Ansprüche zum Beladen des Bohnenbehälters (10), des Mahlwerks (14) und einer Brühkammer.
